# EUROPÄISCHE PATENTSCHRIFT

(11) **EP 3 257 986 B1**
(45) Veröffentlichungstag und Bekanntmachung des Hinweises auf die Patenterteilung: **10.04.2019**
(21) Anmeldenummer: 17174728.0
(22) Anmeldetag: 07.06.2017
(51) Int. Cl.: D04H 1/08, B32B 5/06, B32B 5/26, B32B 7/08, A47G 27/02, A47H 23/08, D06Q 1/00

(54) **VERNÄHTER FILZVERBUND**
SEWN FELT COMPOSITE
FEUTRE COMPOSITE COUSU

(30) Priorität: 14.06.2016 DE 102016110895
(43) Veröffentlichungstag der Anmeldung: 20.12.2017
(73) Patentinhaber: Bonatz, Ivonne, 82205 Gilching (DE); Bonatz, Wolfgang, 82205 Gilching (DE)
(72) Erfinder: Bonatz, Ivonne, 82205 Gilching (DE)
(74) Vertreter: Qip Patentanwälte Dr. Kuehn & Partner mbB

(56) Entgegenhaltungen:
- CA-A- 1 042 209
- DE-A1- 10 053 274
- FR-A1- 2 391 314
- US-A- 1 558 866
- US-A- 1 723 729
- US-A- 3 404 647
- US-A1- 2004 244 663

## Beschreibung

### GEBIET DER ERFINDUNG

Die Erfindung betrifft eine aus mehreren Filzverbunden zusammengefügte Filzauflage und ein Verfahren zum Herstellen einer Filzauflage.

### HINTERGRUND DER ERFINDUNG

Als Filz wird in der Regel ein textiler Verbund aus ungeordnet miteinander verbundenen Fasern bezeichnet, die beispielsweise durch mechanische Bearbeitung von Vliesen hergestellt werden können. Bekannt ist in etwa Wollfilz, der aus Schafwolle hergestellt wird.

Aufgrund der Elastizität und Verformbarkeit von Filz, sowie dessen Dicke im Vergleich zu gewebten Textilien, existieren beim Verarbeiten von Filz besondere Anforderungen. Insbesondere das Vernähen großflächiger, verhältnismäßig dünner Filzschichten kann eine Herausforderung darstellen.

Zum Verbinden mehrerer Filzschichten sind verschiedene Vorgehensweisen bekannt. Beispielsweise zeigt die US 2012 225 242 A, dass eine Filzschicht mit einer zweiten Materialschicht, die Filz sein kann, vernäht und gleichzeitig verklebt werden kann. Die FR 2 391 314 A1 zeigt, dass Gewebeflecken mosaikartig mit einer Unterlage aus Filz verklebt und am Rand vernäht werden können.

Die US 2004/244 663 A1 beschäftigt sich mit einem Verfahren zum Anbringen von Applikationen auf einer Textile. Gewebeflecken, die aus Filz sein können, werden getrennt voneinander mit einer umlaufenden Naht auf eine Textile genäht. Die Ränder der Gewebeflecken in der Form von Buchstaben sind voneinander entfernt.

Die US 1 558 866 A bezieht sich auf ein Gewebe auf das eine Gewebeapplikation aufgenäht wird, die mit einer Beschichtung versehen ist, die ein Ausfransen der Gewebeapplikation verhindern soll.

### ZUSAMMENFASSUNG DER ERFINDUNG

Es ist Aufgabe der Erfindung, das Vernähen einer Mehrzahl von Filzelementen zu einem Verbund im Rahmen der Herstellung einer Filzauflage zu vereinfachen.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Beschrieben wird ein Filzverbund. Unter einem Filzverbund kann dabei eine Zusammenstellung mehrerer flächiger Filzelemente verstanden werden, die miteinander verbunden sind.

Gemäß der Erfindung umfasst der Filzverbund wenigstens eine erste Filzschicht und eine mehrelementige zweite Filzschicht, die auf der ersten Filzschicht angeordnet ist. Die beiden Filzschichten bzw. Filzlagen liegen flächig aufeinander und sind miteinander beispielsweise durch Nähen und/oder Kleben verbunden. Dabei kann die erste Filzschicht lediglich einstückig sein, d.h. aus einem zusammenhängenden Filzelement gefertigt sein, während die zweite Filzschicht mehrere einzelne Filzelemente umfassen kann, die nebeneinander, beispielsweise mosaikartig, auf der ersten Filzschicht angeordnet sein können. Die erste Filzschicht kann eine Unterschicht und die zweite Filzschicht kann eine Oberschicht sein.

Die Filzelemente der zweiten Filzschicht sind als Filz-Formelemente ausgebildet, wobei die zweite Filzschicht wenigstens ein erstes Filz-Formelement und ein zweites Filz-Formelement umfasst, die nebeneinander auf der ersten Filzschicht angeordnet sind. Ein Formelement kann dabei ein Filzelement sein, das einen Rand aufweist, der mit einem Rand eines weiteren Filz-Formelements korrespondiert, so dass die beiden Filz-Formelemente direkt aneinandergrenzen können und/oder lediglich ein Spalt zwischen den beiden Filz-Formelementen verbleibt. Insbesondere können die beiden Filz-Formelemente unterschiedlich geformt sein. Auf diese Weise kann mit den Filz-Formelementen, insbesondere, wenn sie unterschiedlich gefärbt sind, ein Muster in der zweiten Filzschicht erzeugt werden. Ein Filz-Formelement kann ein flächiges in sich verfilztes Gewebeelement sein und/oder kann damit einstückig sein. Beispielsweise kann ein Filz-Formelement aus einem Filzgewebe ausgeschnitten sein.

Die beiden Filz-Formelemente sind jeweils mit der ersten Filzschicht vernäht, wobei die Nähte an Rändern der Filz-Formelemente verlaufen. Insbesondere weist das erste Filz-Formelement einen ersten Rand auf, wobei das erste Filz-Formelement entlang des ersten Randes mittels einer ersten Naht mit der ersten Filzschicht vernäht ist. Genauso weist das zweite Filz-Formelement einen zweiten Rand auf, der entlang des ersten Randes des ersten Filz-Formelements verläuft bzw. an diesen grenzt, und das zweite Filz-Formelement entlang des zweiten Randes mittels einer zweiten Naht mit der ersten Filzschicht vernäht ist.

Insbesondere sind das erstes Filz-Formelement und das zweites Filz-Formelement entlang aneinandergrenzender Ränder getrennt voneinander mit der ersten Filzschicht vernäht. Dass die Filz-Formelemente getrennt voneinander vernäht sind, kann bedeuten dass die Filz-Formelemente nicht direkt miteinander vernäht sind, d.h. dass keine Naht existiert, die Schlaufen aufweist, die durch beide Filz-Formelemente gleichzeitig verlaufen. Wenn jedes Filz-Formelement getrennt von den anderen Filz-Formelementen auf die erste Filzschicht genäht wird, kann dies bei der Verarbeitung von großen Filz-Formelementen von Vorteil sein, da lediglich immer nur ein Filz-Formelement pro Arbeitsgang an die erste Filzschicht genäht werden muss. Vor allem kann auch vermieden werden, dass gleichzeitig drei oder mehr Komponenten miteinander vernäht werden müssen, was problematisch sein kann, wenn diese aufgrund ihrer Größe und/oder ihres Gewichts in sich verzogen sind und/oder unter Spannung stehen.

Die erste Naht und die zweite Naht bzw. die Nähte, mit denen die Filz-Formelemente an aneinander angrenzenden Rändern mit der ersten Filzschicht vernäht sind, können im Wesentlichen parallel verlaufen. Weiter können die erste Naht und die zweite Naht einen gleichen Abstand von dem zugehörigen Rand des jeweiligen Filz-Formelements aufweisen.

Gemäß einer Ausführungsform der Erfindung sind die Nähte, mit denen die Filz-Formelemente auf die erste Filzschicht genäht sind, und insbesondere die erste Naht und/oder die zweite Naht, eine Maschinennaht. Eine Maschinennaht ist eine mit einer Nähmaschine gefertigte Naht, die in der Regel gleichmäßige Schlaufen bzw. Schlaufen gleicher Länge aufweist.

Gemäß einer Ausführungsform der Erfindung ist die erste Naht und/oder die zweite Naht eine Geradstichnaht. Eine Geradstichnaht wird mit einem Geradstich, Steppstich bzw. Doppelsteppstich erzeugt. Die Nähmaschine kann dabei eine Linie von aufeinander abfolgenden Schleifen aus zwei miteinander verschlungenen Fäden erzeugen.

Gemäß einer Ausführungsform der Erfindung sind die Filz-Formelemente der zweiten Filzschicht und insbesondere das erste Filz-Formelement und/oder das zweite Filz-Formelement (mit der ersten und der zweiten Naht) umlaufend vernäht. Das erste und/oder das zweite Filz-Formelement kann jeweils von einer oder mehreren Nähten umlaufen werden, so dass deren Rand komplett mit der ersten Filzschicht vernäht ist.

Gemäß einer Ausführungsform der Erfindung sind das erste Filz-Formelement und/oder das zweite Filz-Formelement mit der ersten Filzschicht flächig verklebt. Neben der Verbindung der ersten Filzschicht mit der zweiten Filzschicht können die beiden Filzschichten und insbesondere die Filz-Formelemente der zweiten Filzschicht mit der ersten Filzschicht miteinander verklebt sein, um die Filz-Formelemente zusätzlich auf der ersten Filzschicht zu fixieren. Insbesondere kann ein Filz-Formelement innerhalb der Naht und/oder zwischen einem Rand und der zugehörigen Naht mit der ersten Filzschicht verklebt sein.

Gemäß einer Ausführungsform der Erfindung überdecken die Filz-Formelemente der zweiten Filzschicht die erste Filzschicht vollständig. Die Filz-Formelemente der zweiten Filzschicht können beispielsweise mosaikartig auf der ersten Filzschicht angeordnet sein. Wenn die Filz-Formelemente getrennt voneinander, d.h. jeweils einzeln mittels Nähten, die an benachbarten Rändern im Wesentlichen parallel verlaufen, an der ersten Filzschicht befestigt werden, kann dies das Zusammennähen und/oder Zusammenkleben vereinfachen. Es ist nicht mehr notwendig, dass mehrere Filz-Formelemente gleichzeitig auf der ersten Schicht positioniert werden, wodurch auch großflächigere Filz-Formelemente ohne Verzerrung befestigt werden können.

Gemäß einer Ausführungsform der Erfindung weisen die Filz-Formelemente der zweiten Schicht und insbesondere das erste Filz-Formelement und das zweite Filz-Formelement die gleiche Höhe auf. Mit anderen Worten kann der Filzverbund eine ebene Oberfläche aufweisen, insbesondere dann, wenn die Filz-Formelemente der zweiten Filzschicht die erste Filzschicht vollständig bedecken.

Gemäß einer Ausführungsform der Erfindung ist ein Spalt zwischen dem ersten Rand und dem zweiten Rand kleiner als eine Höhe der Formelemente der zweiten Filzschicht bzw. des ersten Filz-Formelements und/oder des zweiten Filz-Formelements. Es ist möglich, dass die Filz-Formelemente der zweiten Schicht bzw. deren Ränder, wie etwa der oben genannte erste Rand und zweite Rand, direkt aneinander anstoßen. Es kann aber auch möglich sein, dass sich zwischen den Filz-Formelementen ein (verhältnismäßig schmaler) Spalt befindet. Dieser Spalt kann beispielsweise weniger als 10% der Höhe der Formelemente der zweiten Filzschicht bzw. des ersten Filz-Formelements und/oder des zweiten Filz-Formelements breit sein.

Gemäß einer Ausführungsform der Erfindung ist die zweite Filzschicht entlang eines umlaufenden Randes des Filzverbundes mit der ersten Filzschicht vernäht. Auch diese Randnaht kann eine Maschinennaht und insbesondere eine Geradstichnaht sein. Der umlaufende Rand kann von Rändern der Filz-Formelemente der zweiten Schicht gebildet sein.

Gemäß einer Ausführungsform der Erfindung sind eine oder beide der Filzschichten und insbesondere die Filz-Formelemente, d.h. die erste Filzschicht, das erste Filz-Formelement und/oder das zweite Filz-Formelement, aus Wollfilz hergestellt. Wollfilz kann Filz aus Schafwolle sein.

Beispielsweise können die erste Schicht und die Filz-Formelemente der zweiten Schicht aus Bahnen eines Filzstoffes, insbesondere eines Wollfilzstoffes, ausgeschnitten und anschließend miteinander durch Nähen und optionales Kleben miteinander verbunden werden.

Der Filzverbund kann einzeln als Teppich, Vorhang oder Wandbehang verwendet werden. Filz und insbesondere Wollfilz weisen eine schalldämmende Wirkung auf und ein an Boden, Wand und/oder Decke befestigter Filzverbund kann eine Raumakustik positiv beeinflussen.

Gemäss der Erfindung werden mehrere Filzverbunde modulartig zu einer größeren Auflage zusammengesetzt.

Die Erfindung betrifft eine Filzauflage, die aus mehreren Filzverbunden, so wie in etwa obenstehend und untenstehend beschrieben, zusammengefügt ist. Eine Filzauflage kann beispielsweise ein Teppich, ein Vorhang oder ein Wandbehang sein.

Gemäß der Erfindung umfasst die Filzauflage eine Mehrzahl von Filzverbunden, die als Module der Filzauflage dienen, sowie eine dritte Filzschicht, auf der die Filzverbunde befestigt sind. Die Filzverbunde können aneinander angrenzend auf die dritte Filzschicht geklebt und/oder genäht sind.

Beispielsweise können die Filzverbunde alle die gleiche Größe aufweisen (aber durch eine unterschiedliche zweite Filzschicht optional unterschiedlich gemustert sein). Die Filzverbunde können analog den Filz-Formelementen auf die dritte Filzschicht genäht werden. Somit kann die Filzauflage Nähte aufweisen, die die Filz-Formelemente der zweiten Filzschicht mit der ersten Filzschicht verbinden und weitere Nähte aufweisen, die durch alle drei Filzschichten reichen und die Filzverbunde mit der dritten Filzschicht verbinden.

Es ist auch möglich, dass die Filzauflage mehrelementige Filzschichten aufweist, die auf unterschiedlichen Ebenen angeordnet sind. Mit anderen Worten kann ein Filz-Formelement einer mehrelementigen Filzschicht auf der gleichen Ebene angeordnet sein, wie eine (beispielsweise einstückige) Filzschicht, auf der eine weitere mehrelementige Filzschicht festgenäht ist. Unter einer Ebene kann dabei der Abstand einer Schicht und/oder die Anzahl der dazwischenliegenden Schichten zu einer untersten Schicht verstanden werden.

Gemäß einer Ausführungsform der Erfindung umfasst die Filzauflage wenigstens einen Filzverbund mit einer ersten Filzschicht und eine mehrelementige zweite Filzschicht, so wie beispielsweise obenstehend beschrieben, und eine dritte Filzschicht, auf die der wenigstens eine Filzverbund, insbesondere die erste Filzschicht geklebt und/oder genäht ist, eine (beispielsweise mehrelementige) weitere Filzschicht, die auf der dritten Filzschicht angrenzend zu dem Filzverbund angeordnet ist und die wenigstens ein weiteres Filz-Formelement umfasst, wobei das weitere Filz-Formelement entlang eines Randes, der entlang eines Randes des Filzverbunds verläuft, mittels einer Naht mit der dritten Filzschicht vernäht ist. Der Filzverband kann entlang seines Randes auch mit der dritten Filzschicht vernäht sein.

Auf diese Weise kann ein Paar von Nähten entstehen, die im Wesentlichen parallel zueinander bzw. nebeneinander her verlaufen und/oder die Filz-Formelemente auf verschiedenen Ebenen der Filzauflage mit Filzschichten verbinden. Beispielsweise kann das weitere Filz-Formelement mit einer ersten Naht direkt auf die dritte Filzschicht genäht sein. Neben dem weiteren Filz-Formelement ist eine Filzschicht als Unterlage auf die dritte Filzschicht genäht, auf der sich ein Filz-Formelement befindet, das auf die Unterlage mit einer zweiten Naht genäht ist (beispielsweise mit einer zusätzlichen oder der gleichen Naht). Auf diese Weise befindet sich das direkt auf der dritten Filzschicht befindliche weitere Filz-Formelement auf einer anderen Ebene als das Filz-Formelement auf der Unterlage.

Die erste und die zweite Naht und/oder der Spalt dazwischen können genauso ausgeführt sein, wie in Bezug auf den Filzverbund weiter oben und weiter unten beschrieben. Der Spalt kann jedoch unterschiedlich hohe Ränder aufweisen.

Ein weiterer Aspekt der Erfindung betrifft ein Verfahren zum Herstellen einer Filzauflage, beispielsweise wie sie obenstehend und untenstehend beschrieben ist.

Gemäß der Erfindung umfasst das Verfahren: Bereitstellen von wenigstens einer ersten Filzschicht und von wenigstens einem ersten Filz-Formelement und einem zweiten Filz-Formelement; Vernähen des ersten Filz-Formelements entlang eines ersten Randes mittels einer ersten Naht mit der ersten Filzschicht; beispielsweise nach dem Vernähen des ersten Filz-Formelements, Anordnen des zweiten Filz-Formelements neben dem ersten Filz-Formelement, so dass das erste Filz-Formelement mit dem ersten Rand an einen zweiten Rand des zweiten Filz-Formelements grenzt; Vernähen des zweiten Filz-Formelements entlang des zweiten Randes mittels einer zweiten Naht mit der ersten Filzschicht.

### KURZE BESCHREIBUNG DER FIGUREN

Im Folgenden werden Filzverbunde und Ausführungsbeispiele der Erfindung mit Bezug auf die beiliegenden Figuren detailliert beschrieben.
Fig. 1 zeigt schematisch eine Draufsicht auf einen Filzverbund gemäß einer Ausführungsform der Erfindung.
Fig. 2 zeigt schematisch einen Querschnitt durch einen Filzverbund gemäß einer Ausführungsform der Erfindung.
Fig. 3 zeigt schematisch eine Draufsicht auf eine Filzauflage gemäß einer Ausführungsform der Erfindung.
Fig. 4 zeigt schematisch einen Querschnitt durch eine Filzauflage gemäß einer Ausführungsform der Erfindung.
Fig. 5 zeigt schematisch einen Querschnitt durch eine Filzauflage gemäß einer weiteren Ausführungsform der Erfindung.

Die in den Figuren verwendeten Bezugszeichen und ihre Bedeutung sind in zusammenfassender Form in der Liste der Bezugszeichen aufgeführt. Grundsätzlich sind identische oder ähnliche Teile mit den gleichen Bezugszeichen versehen.

### DETAILLIERTE BESCHREIBUNG VON AUSFÜHRUNGSBEISPIELEN

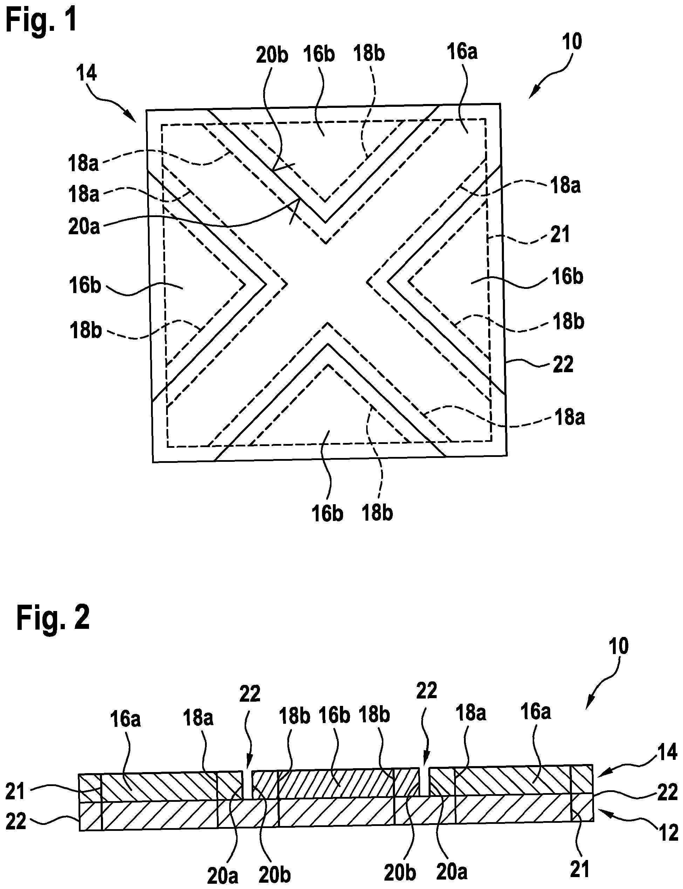

Fig. 1 und 2 zeigen einen Filzverbund 10 von oben und im Querschnitt. Die Abstände und Verhältnisse in den Figuren 1 und 2 und den folgenden Figuren sind rein schematisch und nicht maßstabsgetreu. Der Filzverbund 10 ist als Rechteck dargestellt, kann aber eine beliebige Außenform aufweisen, wie etwa rund, oval, nierenförmig etc.

Der Filzverbund 10 umfasst eine untere, erste Filzschicht 12, die einstückig gefertigt ist, und eine obere, zweite Filzschicht 14, die mehrstückig gefertigt ist. In der Fig. 1 ist die Oberseite der zweiten Filzschicht 14 dargestellt. Beispielsweise kann der Filzverbund 10 ein Teppich oder ein Teppichmodul sein. Dabei dient die untere Filzschicht 12 als Unterseite des Teppichs zur Auflage auf einen Boden und die obere Filzschicht 14 dient als sichtbare Oberseite, die betreten werden kann.

Die obere Filzschicht 14 umfasst mehrere Filz-Formelemente 16a, 16b, die auf der unteren Filzschicht 12 mosaikartig angebracht sind und diese vollständig überdecken. Die Filz-Formelemente 16a, 16b, die die gleiche Höhe bzw. Dicke aufweisen, können unterschiedlich geformt sein und/oder aus verschiedenfarbigem Filz hergestellt sein. Auf diese Weise wird aus den Filz-Formelementen 16a, 16b ein Muster gebildet.

Beispielsweise können die erste Filzschicht 12 und die Filz-Formelemente 16a, 16b aus einem Filzstoff, beispielsweise Meterware, ausgeschnitten sein.

Die Filz-Formelemente 16a, 16b, die die obere Filzschicht 14 bilden, sind mittels Nähten 18a, 18b mit der unteren Filzschicht 12 verbunden. Beispielhaft sind in der Fig. 1 zwei benachbarte Nähte 18a, 18b gezeigt, die parallel zu zwei benachbarten Rändern 20a, 20b zweier Filz-Formelemente 16a, 16b verlaufen. Insbesondere werden die Filz-Formelemente 16a, 16b im Bereich der Ränder 20a, 20b nicht gemeinsam durch eine Naht, sondern getrennt voneinander durch die beiden Nähte 18a, 18b an der unteren Filzschicht 12 fixiert. Auf diese Weise können die Filz-Formelemente 16a, 16b nacheinander an die untere Filzschicht 12 genäht werden, was die Verarbeitung der Filz-Formelemente 16a, 16b erleichtern kann.

Weiter sind die Filz-Formelemente 16a, 16b mittels einer äußeren Naht 21, die den Filzverbund an einem Außenrand 22 umläuft, mit der unteren Filzschicht 12 vernäht. Im Gegensatz zu den inneren Nähten 18a, 18b ist die äußere Naht 21 über mehrere Filz-Formelemente 16a, 16b geführt. Es ist aber auch möglich, dass eine oder mehrere der inneren Nähte 18a, 18b in verschiedenen Abschnitten über verschiedene Filz-Formelemente 16a, 16b verlaufen.

Die Nähte 18a, 18b, 21 können als Maschinennähte und/oder Geradstichnähte ausgeführt sein.

Weiter können eines oder mehrere der Filz-Formelemente 16a, 16b mit der unteren Filzschicht 12 verklebt sein. Insbesondere kann ein Filz-Formelement 16a, 16b in seinem Innenbereich innerhalb der Nähte 18a, 18b und/oder in einem Randbereich zwischen einer Naht 18a, 18b und einem entsprechenden Rand 20a, 20b mit der unteren Filzschicht verklebt sein.

Beispielsweise kann der Filzverbund 10 so hergestellt werden, dass zunächst ein erstes Filz-Formelement 16a auf die untere Filzschicht 12 gelegt wird, wobei das Filz-Formelement 16a auch mit Klebstoff versehen sein kann. Anschließend kann das erste Filz-Formelement 16a mittels einer oder mehrerer innerer Nähte 18a an die erste Filzschicht 12 genäht werden. Weiter kann ein zweites Filz-Formelement 16b an das erste Filz-Formelement 16b bündig angelegt werden, wobei das Filz-Formelement 16b optional auch mit Klebstoff versehen sein kann. Danach kann das zweite Filz-Formelement 16b mittels einer oder mehrerer innerer Nähte 18b mit der unteren Filzschicht vernäht werden. Wenn alle Filz-Formelemente 16a, 16b auf diese Weise mit der unteren Filzschicht vernäht wurden, kann abschließend die äußere Naht 21 angelegt werden.

Letztendlich können alle Filz-Formelemente 16a, 16b mit einer oder mehreren sie umlaufenden Nähten 18a, 18b, 21 an die untere Filzschicht 12 genäht sein.

Wie aus der Fig. 2 hervorgeht, ist es nicht notwendig, dass die Filz-Formelemente 16a, 16b mit ihren Rändern 20a, 20b direkt aneinander anstoßen. Es ist auch möglich, dass zwischen den Rändern 20a, 20b ein Spalt 23 gebildet ist, der allerdings verhältnismäßig schmal ist und beispielsweise weniger als 10% der Dicke bzw. Höhe der zweiten Filzschicht 14 breit ist.

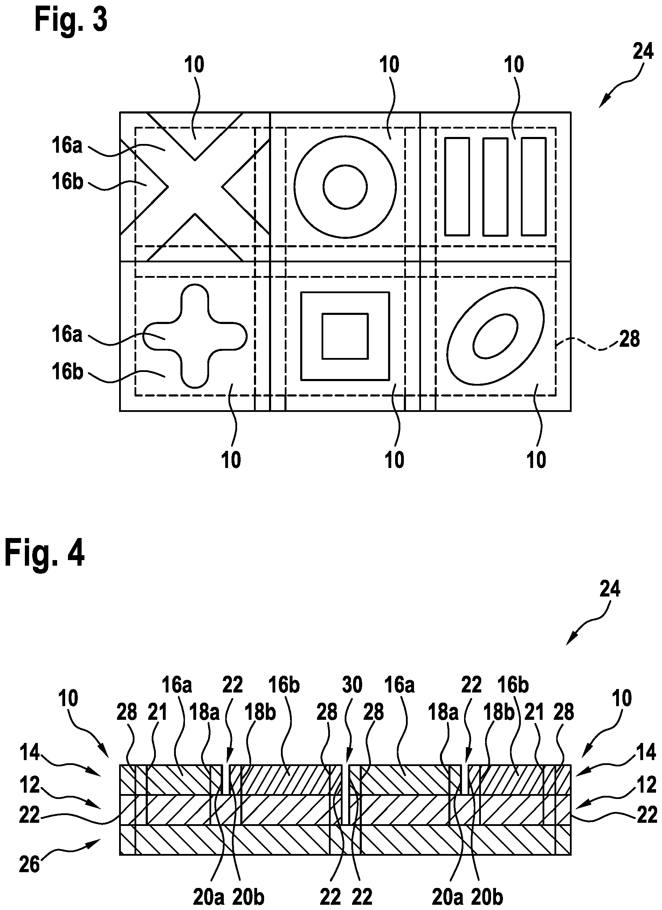

Die Fig. 3 zeigt eine Filzauflage 24, die, genauso wie ein einzelner Filzverbund 10, ein Teppich, eine Wandverkleidung, eine Deckenverkleidung, ein Vorhang etc. sein kann. Die Filzauflage 24 ist aus mehreren Filzverbunden 10 aufgebaut, die bündig nebeneinander angeordnet sind.

Beispielsweise können die Filzverbunde 10 alle die gleiche Größe und/oder Form aufweisen und als Module der Filzauflage 24 betrachtet werden. Ein quadratischer Filzverbund 10 kann beispielsweise eine Größe von 40x40cm, 60x60cm oder 80x80cm aufweisen.

Da die Filzverbunde 10 ein unterschiedliches Muster aufweisen können, das wie obenstehend beschrieben durch das Annähen von Filz-Formelementen 16a, 16b auf einer Filzschicht 12 erzeugt werden kann, kann eine Filzauflage 24 individuell zusammengestellt werden.

Wie in der Fig. 4 gezeigt ist, können die Filzverbunde 10 getrennt voneinander auf eine dritte Filzschicht 26, die als gemeinsame Trägerschicht dient, genäht werden. Dies kann analog der Filz-Formelemente 16a, 16b geschehen, die auf die erste Filzschicht 12 genäht werden. Die zugehörige Naht 28 verläuft dabei durch alle drei Filzschichten 14, 12, 26.

Beispielsweise können die eine oder mehreren Nähte 28 jeden der Filzverbunde 10 an deren Außenrand 22 umrunden. Insbesondere kann in einem Bereich, in dem zwei Filzverbunde 10 aneinandergrenzende Ränder 22 aufweisen, jeweils eine Naht 28 entlang des entsprechenden Randes 22 verlaufen.

Weiter ist es möglich, dass eine Naht 28 eine Außennaht 21 ersetzt und/oder parallel zu einer Außennaht 21 verläuft.

Zusätzlich können die Filzverbunde 10 auch auf die Filzschicht 26 geklebt werden.

Auch zwischen den Filzverbunden 10 kann ein Spalt 30 gebildet sein, der verhältnismäßig schmal sein kann. Beispielsweise kann der Spalt 30 eine geringere Breite als 10% der Höhe einer der Filzschichten 12, 14, 26 aufweisen. Es ist aber auch möglich, dass die Filzverbunde 10 direkt aneinander anstoßen.

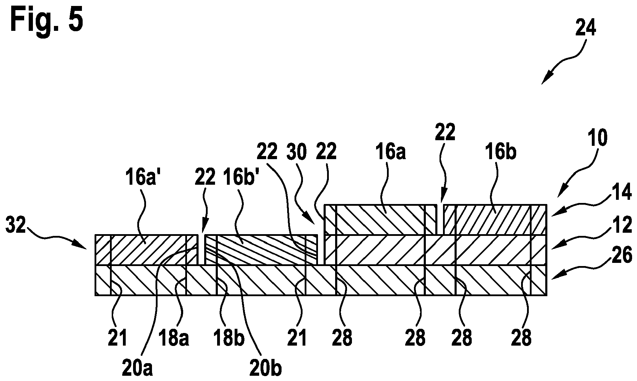

Fig. 5 zeigt einen Querschnitt durch eine weitere Filzauflage 24, auf der analog zu der Fig. 4 ein Filzverbund 10, beispielsweise als Modul befestigt ist. Es ist zu verstehen, dass die Ausführungsformen der Fig. 4 und 5 kombiniert werden können, d.h. dass auch mehrere Filzverbunde 10 bei der Ausführungsform der Fig. 5 auf der dritten Filzschicht 26 befestigt, d.h. geklebt und/oder vernäht, sein können.

Die Fig. 5 zeigt auch, dass die Filz-Formelemente 16a und 16b, sowie die erste Filzschicht 12 lediglich mit durch alle drei Filzschichten 14, 12, 26 gehenden Nähten 28 vernäht sein können.

Die Fig. 5 zeigt weiter, dass weitere Filz-Formelemente 16a' und 16b' direkt auf die dritte Filzschicht 26 befestigt sein können, beispielsweise genauso, wie die Filz-Formelemente 16a und 16b in der Fig. 2 auf die erste Filzschicht 12 genäht und/oder geklebt sind. Die beiden Filz-Formelemente 16a', 16b' bilden eine weitere mehrelementige Filzschicht 32.

Das Filz-Formelement 16b' ist dabei angrenzend an den Filzverbund 10 vernäht, so dass zwischen dem Filz-Formelement 16b' und dem Filzverbund 10 lediglich ein schmaler Spalt 30 verbleibt. Dieser Spalt 30 weist unterschiedlich hohe Ränder 22 auf. Es ist auch möglich, dass das Filz-Formelement 16b' direkt an die zweite Filzschicht 12 des Filzverbunds 10 stößt. Auf diese Weise befinden sich nun das Filz-Formelement 16b' und das Filz-Formelement 16a auf unterschiedlichen Ebenen. Trotzdem sind zwei im Wesentlichen parallel zueinander verlaufende und/oder parallel zu den aneinander grenzenden Rändern 22 verlaufenden Nähte 21, 28 vorhanden, durch die die beiden Filz-Formelemente 16a und 16b' getrennt voneinander mit der dritten Filzschicht 26 verbunden sind. Insbesondere werden die Filz-Formelemente 16a, 16b' in diesem Bereich nicht gemeinsam durch eine Naht, sondern getrennt voneinander durch die beiden Nähte 21, 28 an der dritten Filzschicht 26 fixiert.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### LISTE DER BEZUGSZEICHEN

- 10: Filzverbund
- 12: erste Filzschicht
- 14: zweite Filzschicht
- 16a: erstes Filz-Formelement
- 16b: zweites Filz-Formelement
- 16a': weiteres Filz-Formelement
- 16b': weiteres Filz-Formelement
- 18a: erste Naht
- 18b: zweite Naht
- 20a: erster Rand
- 20b: zweiter Rand
- 21: Außennaht
- 22: Außenrand
- 23: Spalt
- 24: Filzauflage
- 26: dritte Filzschicht
- 28: Naht
- 30: Spalt
- 32: weitere Filzschicht

## Patentansprüche

1. Filzauflage (24), umfassend:
eine Mehrzahl von Filzverbunden (10) als Modul der Filzauflage, wobei jeder der Filzverbunde (10) umfasst:
wenigstens eine erste Filzschicht (12),
eine mehrelementige zweite Filzschicht (14), die auf der ersten Filzschicht (12) angeordnet ist und die wenigstens ein erstes Filz-Formelement (16a) und ein zweites Filz-Formelement (16b) umfasst, die nebeneinander auf der ersten Filzschicht (14) angeordnet sind;
wobei das erste Filz-Formelement (16a) und das zweite Filz-Formelement (16b) entlang aneinandergrenzender Ränder (20a, 20b) getrennt voneinander mit der ersten Filzschicht vernäht sind;
wobei das erste Filz-Formelement (16a) einen ersten Rand (20a) aufweist und das erste Filz-Formelement (16a) entlang des ersten Randes (20a) mittels einer ersten Naht (18a) mit der ersten Filzschicht (12) vernäht ist;
wobei das zweite Filz-Formelement (16b) einen zweiten Rand (20b) aufweist, der entlang des ersten Randes (20a) des ersten Filz-Formelements (16a) verläuft und an diesen grenzt, und das zweite Filz-Formelement (16b) entlang des zweiten Randes (20b) mittels einer zweiten Naht (18b) mit der ersten Filzschicht (12) vernäht ist;
wobei die Filzauflage (24) weiter eine dritte Filzschicht (26) umfasst;
wobei die Filzverbunde (10) aneinander angrenzend auf die dritte Filzschicht (26) geklebt und/oder genäht sind.

2. Filzauflage (24) nach Anspruch 1,
wobei die erste Naht (18a) und/oder die zweite Naht (18b) eine Maschinennaht ist.

3. Filzauflage (24) nach Anspruch 1 oder 2,
wobei die erste Naht (18a) und/oder die zweite Naht (18b) eine Geradstichnaht ist.

4. Filzauflage (24) nach einem der vorhergehenden Ansprüche,
wobei das erste Filz-Formelement (16a) und/oder das zweite Filz-Formelement (16b) umlaufend mit einer Naht (16a, 16b, 21) mit der ersten Filzschicht (12) vernäht sind.

5. Filzauflage (24) nach einem der vorhergehenden Ansprüche,
wobei das erste Filz-Formelement (16a) und/oder das zweite Filz-Formelement (16b) mit der ersten Filzschicht (12) flächig verklebt sind.

6. Filzauflage (24) nach einem der vorhergehenden Ansprüche,
wobei Filz-Formelemente (16a, 16b) der zweiten Filzschicht (14) die erste Filzschicht (12) vollständig überdecken.

7. Filzauflage (24) nach einem der vorhergehenden Ansprüche,
wobei das erste Filz-Formelement (16a) und das zweite Filz-Formelement (16b) die gleiche Höhe aufweisen.

8. Filzauflage (24) nach einem der vorhergehenden Ansprüche,
wobei die erste Filzschicht (12), das erste Filz-Formelement (16a) und das zweite Filz-Formelement (16b) aus Wollfilz hergestellt sind.

9. Filzauflage (24) nach einem der vorhergehenden Ansprüche,
wobei ein Spalt (23) zwischen dem ersten Rand (20a) und dem zweiten Rand (20b) kleiner als eine Höhe des ersten Filz-Formelements (16a) und/oder des zweiten Filz-Formelements ist (16b).

10. Filzauflage (24) nach einem der vorhergehenden Ansprüche,
wobei der erste Rand (20a) und der zweite Rand (20b) aneinanderstoßen.

11. Filzauflage (24) nach einem der vorhergehenden Ansprüche,
wobei die zweite Filzschicht (14) entlang eines umlaufenden Randes (22) des Filzverbundes (10) mit der ersten Filzschicht (12) vernäht ist.

12. Filzauflage (24) nach einem der vorhergehenden Ansprüche, weiter umfassend:
eine weitere Filzschicht (32), die auf der dritten Filzschicht (12) angrenzend zu einem der Filzverbunde (10) angeordnet ist und die wenigstens ein weiteres Filz-Formelement (16b') umfasst;
wobei das weitere Filz-Formelement (16b) entlang eines Randes (22), der entlang eines Randes (22) des Filzverbunds (10) verläuft, mittels einer Naht (21) mit der dritten Filzschicht (12) vernäht ist.

13. Verfahren zum Herstellen einer Filzauflage (24) nach einem der Ansprüche 1 bis 12, das Verfahren umfassend:
Herstellen einer Mehrzahl von Filzverbunden (10) durch:
Bereitstellen von wenigstens einer ersten Filzschicht (12) und von wenigstens einem ersten Filz-Formelement (16a) und einem zweiten Filz-Formelement (16b);
Vernähen des ersten Filz-Formelements (16a) entlang eines ersten Randes (20a) mittels einer ersten Naht (18a) mit der ersten Filzschicht (12);
Anordnen des zweiten Filz-Formelements (16b) neben dem ersten Filz-Formelement (16a), so dass das erste Filz-Formelement (16a) mit dem ersten Rand (20a) an einen zweiten Rand (20b) des zweiten Filz-Formelements (16b) grenzt;
Vernähen des zweiten Filz-Formelements (16b) entlang des zweiten Randes (20b) mittels einer zweiten Naht (18b) mit der ersten Filzschicht (12);
Kleben und/oder Nähen der Filzverbunde (10) aneinander angrenzend auf eine dritte Filzschicht (26).

## Claims

1. Felt support (24), comprising:
a plurality of felt composites (10) as a module of the felt support, each of the felt composites comprising:
at least one first felt layer (12),
a multi-element second felt layer (14), which is arranged on the first felt layer (12) and which comprises at least a first felt shaping element (16a) and a second felt shaping element (16b) which are arranged side by side on the first felt layer (14);
wherein the first felt shaping element (16a) and the second felt shaping element (16b) are sewn to the first felt layer separately from one another along mutually adjacent edges (20a, 20b);
wherein the first felt shaping element (16a) has a first edge (20a) and the first felt shaping element (16a) is sewn to the first felt layer (12) along the first edge (20a) by means of a first seam (18a);
wherein the second felt shaping element (16b) has a second edge (20b) which extends along and is adjacent to the first edge (20a) of the first felt shaping element (16a), and the second felt shaping element (16b) is sewn to the first felt layer (12) along the second edge (20b) by means of a second seam (18b);
wherein the felt support (24) further comprises a third felt layer (26) ;
wherein the felt composites (10) are adhered and/or sewn to the third felt layer (26) mutually adjacently.

2. Felt support (24) according to claim 1,
wherein the first seam (18a) and/or the second seam (18b) is a machine seam.

3. Felt support (24) according to either claim 1 or claim 2, wherein the first seam (18a) and/or the second seam (18b) is a straight-stitch seam.

4. Felt support (24) according to any of the preceding claims, wherein the first felt shaping element (16a) and/or the second felt shaping element (16b) are peripherally sewn to the first felt layer (12) by means of a seam (16a, 16b, 21).

5. Felt support (24) according to any of the preceding claims, wherein the first felt shaping element (16a) and/or the second felt shaping element (16b) are glued to the first felt layer (12) in a planar manner.

6. Felt support (24) according to any of the preceding claims, wherein felt shaping elements (16a, 16b) of the second felt layer (14) fully cover the first felt layer (12).

7. Felt support (24) according to any of the preceding claims, wherein the first felt shaping element (16a) and the second felt shaping element (16b) are of the same height.

8. Felt support (24) according to any of the preceding claims, wherein the first felt layer (12), the first felt shaping element (16a) and the second felt shaping element (16b) are produced from wool felt.

9. Felt support (24) according to any of the preceding claims, wherein a gap (23) between the first edge (20a) and the second edge (20b) is smaller than a height of the first felt shaping element (16a) and/or the second felt shaping element (16b) .

10. Felt support (24) according to any of the preceding claims, wherein the first edge (20a) and the second edge (20b) abut one another.

11. Felt support (24) according to any of the preceding claims, wherein the second felt layer (14) is sewn to the first felt layer (12) along a peripheral edge (22) of the felt composite (10).

12. Felt support (24) according to any of the preceding claims, further comprising:
a further felt layer (32), which is arranged on the third felt layer (12) adjacent to one of the felt composites (10) and which comprises at least one further felt shaping element (16b');
wherein the further felt shaping element (16b) is sewn to the third felt layer (12) along an edge (22), which extends along an edge (22) of the felt composite (10), by means of a seam (21).

13. Method for producing a felt support (24) according to any of claims 1 to 12, the method comprising:
producing a plurality of felt composites (10) by:
providing at least one first felt layer (12) and at least a first felt shaping element (16a) and a second felt shaping element (16b);
sewing the first felt shaping element (16a) to the first felt layer (12) along a first edge (20a) by means of a first seam (18a);
arranging the second felt shaping element (16b) alongside the first felt shaping element (16a) in such a way that the first edge (20a) of the first felt shaping element (16a) is adjacent to a second edge (20b) of the second felt shaping element (16b);
sewing the second felt shaping element (16b) to the first felt layer (12) along the second edge (20b) by means of a second seam (18b);
adhering and/or sewing the felt composites (10) to a third felt layer (26) mutually adjacently.

## Revendications

1. Nappe de feutre (24), comprenant :
une pluralité d'assemblages de feutre (10) comme module de la nappe de feutre, chacun des assemblages de feutre (10) comprenant :
au moins une première couche de feutre (12),
une deuxième couche de feutre (14) à plusieurs éléments, qui est disposée sur la première couche de feutre (12) et qui comprend au moins un premier élément de forme en feutre (16a) et un deuxième élément de forme en feutre (16b), qui sont disposés l'un à côté de l'autre sur la première couche de feutre (14) ;
le premier élément de forme en feutre (16a) et le deuxième élément de forme en feutre (16b) étant cousus à la première couche de feutre séparés l'un de l'autre le long de bords adjacents (20a, 20b) ;
le premier élément de forme en feutre (16a) comportant un premier bord (20a) et le premier élément de forme en feutre (16a) étant cousu à la première couche de feutre (12) le long du premier bord (20a) au moyen d'une première couture (18a) ;
le deuxième élément de forme en feutre (16b) comportant un deuxième bord (20b), qui s'étend le long du premier bord (20a) du premier élément de forme en feutre (16a) et est adjacent à celui-ci, et le deuxième élément de forme en feutre (16b) étant cousu à la première couche de feutre (12) le long du deuxième bord (20b) au moyen d'une deuxième couture (18b) ;
la nappe de feutre (24) comprenant en outre une troisième couche de feutre (26) ;
les assemblages de feutre (10) étant collés et/ou cousus adjacents les uns aux autres sur la troisième couche de feutre (26).

2. Nappe de feutre (24) selon la revendication 1,
dans laquelle la première couture (18a) et/ou la deuxième couture (18b) sont une couture à la machine.

3. Nappe de feutre (24) selon la revendication 1 ou 2,
dans laquelle la première couture (18a) et/ou la deuxième couture (18b) sont une couture au point droit.

4. Nappe de feutre (24) selon l'une des revendications précédentes,
dans laquelle le premier élément de forme en feutre (16a) et/ou le deuxième élément de forme en feutre (16b) sont cousus à la première couche de feutre (12) sur leur périphérie par une couture (16a, 16b, 21).

5. Nappe de feutre (24) selon l'une des revendications précédentes,
dans laquelle le premier élément de forme en feutre (16a) et/ou le deuxième élément de forme en feutre (16b) sont collés à plat à la première couche de feutre (12).

6. Nappe de feutre (24) selon l'une des revendications précédentes,
dans laquelle les éléments de forme en feutre (16a, 16b) de la deuxième couche de feutre (14) recouvrent complètement la première couche de feutre (12).

7. Nappe de feutre (24) selon l'une des revendications précédentes,
dans laquelle le premier élément de forme en feutre (16a) et le deuxième élément de forme en feutre (16b) présentent la même hauteur.

8. Nappe de feutre (24) selon l'une des revendications précédentes,
dans laquelle la première couche de feutre (12), le premier élément de forme en feutre (16a) et le deuxième élément de forme en feutre (16b) sont fabriqués en feutre de laine.

9. Nappe de feutre (24) selon l'une des revendications précédentes,
dans laquelle un espace (23) entre le premier bord (20a) et le deuxième bord (20b) est plus petit qu'une hauteur du premier élément de forme en feutre (16a) et/ou du deuxième élément de forme en feutre (16b).

10. Nappe de feutre (24) selon l'une des revendications précédentes,
dans laquelle le premier bord (20a) et le deuxième bord (20b) sont contigus.

11. Nappe de feutre (24) selon l'une des revendications précédentes,
dans laquelle la deuxième couche de feutre (14) est cousue à la première couche de feutre (12) le long d'un bord (22) périphérique de l'assemblage de feutre (10).

12. Nappe de feutre (24) selon l'une des revendications précédentes, comprenant en outre :
une autre couche de feutre (32), qui est disposée sur la troisième couche de feutre (12) adjacente à un des assemblages de feutre (10) et qui comprend au moins un autre élément de forme en feutre (16b') ;
l'autre élément de forme en feutre (16b) étant cousu à la troisième couche de feutre (12) au moyen d'une couture (21) le long d'un bord (22) qui s'étend le long d'un bord (22) de l'assemblage de feutre (10).

13. Procédé de fabrication d'une nappe de feutre (24) selon l'une des revendications 1 à 12, le procédé comprenant les étapes de :
fabrication d'une pluralité d'assemblages de feutre (10) par :
la mise à disposition d'au moins une première couche de feutre (12) et d'au moins un premier élément de forme en feutre (16a) et un deuxième élément de forme en feutre (16b) ;
la couture du premier élément de forme en feutre (16a) à la première couche de feutre (12) au moyen d'une première couture (18a) le long d'un premier bord (20a) ;
la disposition du deuxième élément de forme en feutre (16b) à côté du premier élément de forme en feutre (16a), de sorte que le premier élément de forme en feutre (16a) est adjacent par le premier bord (20a) à un deuxième bord (20b) du deuxième élément de forme en feutre (16b) ;
la couture du deuxième élément de forme en feutre (16b) à la première couche de feutre (12) au moyen d'une deuxième couture (18b) le long du deuxième bord (20b) ;
le collage et/ou la couture des assemblages de feutre (10) de manière adjacente l'un à l'autre sur une troisième couche de feutre (26).
